# EUROPÄISCHE PATENTSCHRIFT

(11) **EP 0 416 375 B1**
(45) Veröffentlichungstag und Bekanntmachung des Hinweises auf die Patenterteilung: **26.05.1993**
(21) Anmeldenummer: 90116129.9
(22) Anmeldetag: 23.08.1990
(51) Int. Cl.: F23M 5/00, F27D 1/06, F16L 59/02, B32B 18/00

(54) **Wärmedämmplatte**
Heat insulating plate
Plaque calorifuge

(30) Priorität: 07.09.1989 DE 8910674 U
(43) Veröffentlichungstag der Anmeldung: 13.03.1991
(73) Patentinhaber: Carborundum Deutschland GmbH, D-40597 Düsseldorf (DE)
(72) Erfinder: Breuers, Manfred, D-4156 Willich 3 (DE)
(74) Vertreter: Cohausz & Florack Patentanwälte

(56) Entgegenhaltungen:
- EP-A- 0 228 918
- DE-A- 3 328 313
- GB-A- 2 202 927
- US-A- 2 943 008
- PATENT ABSTRACTS OF JAPAN vol. 7, no. 53 (C-154)(1198) 3. März 1983 & JP-A-57 200 506 (TOSHIBA CERAMICS KK) 8. Dezember 1982
- JAPANESE PATENTS GAZETTE, Derwent Publications Ltd., London, GB, Sektion Chemie, Woche Y30, Zusammenfassung Nr. 53022Y/30, 5. Sep 1977 & JP-A-52 70909 (SHOWA DENKO KK) 13. Jun 1977

## Beschreibung

Die Neuerung betrifft eine Wärmedämmplatte für die Verkleidung der Kesselrohre und/oder Wände in Dampf- oder Fernwärmeerzeugungsanlagen.

In den Feuerungsräumen von insbesondere mit Kohle oder Müll betriebenen Verbrennungsanlagen müssen die metallenen Kesselwände und -rohre einerseits vor der starken Wärmeeinwirkung aus dem Feuerungsraum geschützt werden, andererseits muß eine Wärmedämmung des Feuerungsraums bewirkt werden, damit die von neuzeitlichen Anlagen verlangten hohen Verbrennungstemperaturen im Feuerungsraum auch erreicht werden Viele Schadstoffe insbesondere bei der Müllverbrennung zersetzen sich erst bei hohen Temperaturen, die daher bei zur Erreichung der im Emissionsschutzgesetz geforderten niedrigen Schadstoff-Konzentration erreicht werden müssen. Die bisher als Verkleidung in Feuerräumen verwendeten Siliciumcarbid-Platten, die sich müllschlackeabweisend verhalten, haben eine zu hohe Wärmeleitfähigkeit, so daß sie die Wärme aus dem Feuerungsraum zu rasch ableiten. Siliciumcarbid-Platten in besonders gestalteter Bauweise sind z. B. aus dem EP 0 228 918 bekannt.

Der Neuerung liegt nun die Aufgabe zugrunde, eine Wärmedämmplatte der eingangs genannten Gattung in ihrem Wärmedämmverhalten zu verbessern, ohne ihren müllschlackeabweisenden Charakter zu verändern.

Zur Lösung dieser Aufgabe wird gemäß der Neuerung eine Wärmedämmplatte vorgeschlagen, die aus zwei miteinander versinterten Schichten besteht, von denen eine aus Aluminiumoxid und die andere aus Siliciumcarbid besteht, wobei an der Aluminiumoxid-Schicht Befestigungsmittel vorgesehen sind zum Anhängen an den Kesselwänden oder -rohren im Feuerungsraum von Dampf- oder Fernwärmeerzeugungsanlagen, die vornehmlich mit Müll beheizt werden.

Dabei ist bevorzugt die Siliciumcarbid-Schicht kleiner als 50 %, vorzugsweise dünner als 25 % der gesamten Schichtdicke.

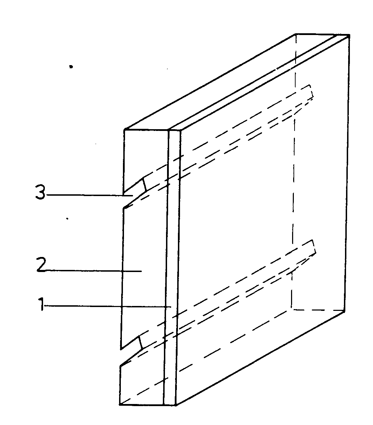

Die neuerungsgemäße Wärmedämmplatte in Sandwich-Bauweise erfüllt die gestellten Forderungen in hervorragender Weise. Die dem Feuerungsraum zugewandte Siliciumcarbid-Schicht 1, siehe hierzu die perspektivische Darstellung in der Zeichnung, erfüllt die bisher schon ausgeübte Funktion, die Müllverbrennungsschlacke abzuweisen, während die dahinter angeordnete dickere Aluminiumoxid-Schicht 2 zur gewünschten stärkeren Wärmedämmung beiträgt und die Mittel zur Befestigung enthält.

Die in der Aluminiumoxid-Schicht vorgesehenen Befestigungsmittel 3 können z.B. Löcher sein, in welche Stifte beim Anhängen der Sandwich-Wärmedämmplatte an den Wänden oder Rohren eingreifen und die Platte halten.

Hergestellt wird die neuerungsgemäße Sandwich-Wärmedämmplatte, indem in eine Form zunächst Siliciumcarbid-Korn eingerüttelt wird und die Form dann mit Aluminiumoxid-Rohmaterial aufgefüllt wird. Gegebenenfalls können die beiden Lagen dann nochmals durch Rütteln, Stampfen oder Pressen verdichtet werden.

Anschließend erfolgt das Trocknen und Sintern, wobei beide Lagen sintern und an der Verbindungsfläche miteinander versintern. Die Befestigungsmittel 3 werden eingeformt oder eingesintert.

Auf diese Weise entsteht eine kompakte gesinterte Wärmedämmplatte in beliebiger Form, Größe und Dicke. Da die Siliciumcarbid-Schicht 1 nur den Schutz gegenüber der Müllverbrennungsschlacke zu übernehmen hat, kann sie gegenüber der Aluminiumoxid-Schicht 2 verhältsnismäßig dünn sein, während die Aluminiumoxid-Schicht 2 zur Ausübung ihrer Wärmedämmfunktion in ausreichender Dicke erzeugt werden muß.

## Patentansprüche

1. Wärmedämmplatte für die Verkleidung der Kesselrohre und/oder Wände in Dampf- oder Fernwärmeerzeugungsanlagen,
**dadurch gekennzeichnet,** daß sie aus zwei miteinander versinterten Schichten (1,2) besteht, von denen eine aus Aluminiumoxid und die andere aus Siliciumcarbid besteht, und daß an der Aluminiumoxid-Schicht (2) Befestigungsmittel (3) angebracht sind.

2. Wärmedämmplatte nach Anspruch 1,
**dadurch gekennzeichnet,** daß die Dicke der Siliciumcarbid-Schicht (1) kleiner als 50 % der gesamten Schichtdicke ist.

3. Wärmedämmplatte nach Anspruch 2,
**dadurch gekennzeichnet,** daß die Siliciumcarbid-Schicht (1) dünner als 25 % der gesamten Schichtdicke ist.

## Claims

1. A heat insulating plate for the lining of boiler tubes and/or walls in steam or district heating generating plants, characterized in that they consist of two layers (1, 2) which are sintered to one another, of which one is made of aluminium oxide, the other being made of silicon carbide, attaching means (3) being provided on the aluminium oxide layer (2).

2. A heat insulating plate according to claim 1, characterized in that the thickness of the silicon carbide layer (1) is smaller than 50% of the total layer thickness.

3. A heat insulating plate according to claim 2, characterized in that the silicon carbide layer (1) is thinner than 25% of the total layer thickness.

## Revendications

1. Plaque calorifuge pour le revêtement des tubes de chaudière et/ou des parois dans des installations de production de vapeur ou de chaleur à distance,
caractérisée en ce qu'elle est constituée de deux couches (1, 2), agglomérées l'une avec l'autre par frittage, dont l'une est constituée d'oxyde d'aluminium et l'autre de carbure de silicium, des moyens de fixation (3) étant ménagés sur la couche d'oxyde d'aluminium (2).

2. Plaque calorifuge selon la revendication 1,
caractérisée en ce que l'épaisseur de la couche de carbure de silicium (1) est plus faible que 50 % de l'épaisseur totale des couches.

3. Plaque calorifuge selon la revendication 2,
caractérisée en ce que la couche de carbure de silicium (1) est plus mince que 25 % de l'épaisseur totale des couches.
